# EUROPÄISCHE PATENTSCHRIFT

(11) **EP 1 270 964 B1**
(45) Veröffentlichungstag und Bekanntmachung des Hinweises auf die Patenterteilung: **09.11.2005**
(21) Anmeldenummer: 02013188.4
(22) Anmeldetag: 14.06.2002
(51) Int. Cl.: F16B 47/00, F16B 5/02, F16B 43/02, B60R 11/00

(54) **Befestigungsanordnung zum justierbaren Befestigen eines Gerätes**
Fastening assembly for the adjustable mounting of an apparatus
Dispositif de fixation pour la fixation réglable d'un appareil

(30) Priorität: 19.06.2001 DE 20110111 U
(43) Veröffentlichungstag der Anmeldung: 02.01.2003
(73) Patentinhaber: SIEMENS AKTIENGESELLSCHAFT, 80333 München (DE)
(72) Erfinder: Funk, Stefan, 78050 Villingen-Schwenningen (DE); Götz, Franz, 78052 Villingen-Schwenningen (DE)

(56) Entgegenhaltungen:
- US-A- 6 059 010

## Beschreibung

Die Erfindung betrifft eine Befestigungsanordnung zum justierbaren Befestigen eines Gerätes unter Verwendung eines unmittelbar am Gehäuse des Gerätes ausgebildeten bzw. eines mit dem Gerät verbindbaren Gerätehalters, wobei dem Gerätehalter ein der Befestigung des Gerätes am Einbauort dienendes Flanschelement zugeordnet ist und mittels einer Spannschraube unterschiedliche Winkellagen zwischen dem Gerätehalter und der Flanschfläche des Flanschelementes fixierbar sind (US 6059010 A).

Bei Geräten, die beispielweise in Fahrzeugen im unmittelbaren Beobachtungs- und/oder Handhabungsbereich des Fahrers angeordnet werden müssen, bei Geräten die auf ortsfest am Straßenrand oder an Schilderbrücken installierte Kommunikationseinrichtungen auszurichten sind oder bei Geräten die Beschleunigungs- und/oder Neigungssensoren enthalten und somit eine in wesentlichen horizontale oder vertikale Ausrichtung bei ihrer Montage in einem Fahrzeug erforderlich machen, wird die aufgrund unterschiedlicher Topografien am Einbauort der Geräte erforderliche Justierfähigkeit zweckmäßigerweise den Befestigungsmitteln zugeordnet.

Im Prinzip werden, wenn eine Verstellbarkeit in beliebiger Richtung und ein Festhalten der eingestellten Funktionslage gefordert ist, Kugelzapfenlagerungen angewandt, wobei ein Kugelzapfen von einer Kugelkappe formschlüssig umgriffen wird.

Das Fixieren solcher Kugelgelenke kann dadurch erfolgen, dass die zusammenwirkenden Bauteile, von denen gegebenenfalls eines in geeigneter Weise geschlitzt ist, mittels Überwurfmuttern, Exzentern oder Keilelementen zusammengepresst werden. Abgesehen von einer bei Kugelgelenken gegebenen, aufwendigen Bauform und der erforderlichen hohen Fertigungsgenauigkeit weisen Kugelgelenke eine relative große Bauhöhe auf. Demgemäß sind übliche Kugelgelenke als Befestigungsmittel für die eingangs genannten Anwendungsfälle wenig geeignet, zumal bei diesen Anwendungsfällen lediglich eine einmalige Justierung vorzunehmen ist und nicht nur aus ästhetischen Gründen, sondern insbesondere zur Vermeidung von Schwingungen der Abstand zwischen dem Gerät und der Anflanschfläche so gering wie möglich gewählt werden sollte.

Aufgabe der vorliegenden Erfindung war es somit, eine Befestigungsanordnung zu schaffen, die eine Lagejustierung bei der Befestigung eines Gerätes oder eines Gerätehalters mit möglichst einfachen Mitteln gestattet, mit der eine möglichst schnelle und sichere Montage insbesondere bei einem nachträglichen Einbau in einem Fahrzeug durchführbar ist und die bezüglich ihrer Herstellung den Bedingungen der Großserie gerecht wird.

Die Lösungen dieser Aufgabe ist dadurch gekennzeichnet, dass auf der Gegenseite der Flanschfläche des Flanschelementes eine Kalotte mit einer in deren Achsrichtung angebrachten Gewindebohrung ausgebildet ist, dass ein scheibenförmiges, mit einem diametrischen Schlitz versehenes Stellelement vorgesehen ist, wobei die Breite des Schlitzes dem Schaftdurchmesser der Spannschraube entspricht und die dem Kopf der Spannschraube zugeordnete Auflagefläche in Richtung des Schlitzes gekrümmt ist, dass der Gerätehalter wenigstens eine Lagerplatte aufweist, in welcher eine Durchgangsbohrung vorgesehen ist, deren Durchmesser um ein Mehrfaches größer ist, als der Schaftdurchmesser der Spannschraube und deren eine Bohrungskante, an welcher die Kalotte des Flanschelementes während des Justierens anliegt, dem Flanschelement als eine Schwenkbewegungen quer zur Bohrungsachse ermöglichende Schneidenlagerung dient und dass für das Stellelement, welches der dem Flanschelement gegenüberliegenden Seite der Lagerplatte zugeordnet ist, an der Lagerplatte eine Drehbewegung zentrisch zur Durchgangsbohrung ermöglichende Lagerung vorgesehen ist.

Weitere vorteilhafte Ausbildungen der Erfindung gehen aus den abhängigen Ansprüchen hervor.

Die Erfindung, die die gestellte Aufgabe in vollem Umfang löst, bietet den Vorzug, dass einerseits innerhalb eines für die üblichen Anwendungsfälle ausreichend großen Schwenkbereichs der Vorteil eines Kugelgelenkes genutzt werden kann, andererseits eine besonders niedrige Bauhöhe gegeben ist. Außerdem ist hervorzuheben, dass die erfindungsgemäße Befestigungsanordnung mit einem Minimum an Bauteilen auskommt und aus diesem Grunde, aber auch deshalb, weil das Stellelement, das ohne von Hand verstellt zu werden lediglich eine Bewegung in einer Ebene zulässt, eine Sperrfunktion ausübt und somit eine Dejustierung beim Anziehen der Spannschraube verhindert, eine relative schnelle und sichere Montage gestattet. Gleiches gilt hinsichtlich einer kriechenden Verstellung infolge der in einem Kraftfahrzeug herrschenden erheblichen Temperaturwechsel und der beim Betrieb des Fahrzeuges entstehenden Erschütterungen.

Im folgenden sei die Erfindung anhand von Zeichnungen erläutert. Es zeigen:
- Figur 1: eine Draufsicht eines mit der erfindungsgemäßen Befestigungsanordnung versehenen Gerätehalters,
- Figur 2: eine Seitenansicht des in Figur 1 dargestellten Gerätehalters und der dem Gerätehalter zugeordneten Befestigungsanordnung,
- Figur 3: einen Schnitt gemäß der Schnittlinie A in Figur 1,
- Figur 4: eine Draufsicht des Stellelementes,
- Figur 5: einen Schnitt des Stellelementes gemäß der Schnittlinie B in Figur 4,
- Figur 6: eine Draufsicht einer Varianten des in den Figuren 1, 2 und 3 dargestellten Flanschelementes der Befestigungsanordnung,
- Figur 7: einen Schnitt des Flanschelementes gemäß der Schnittlinie C in Figur 6,
- Figur 8: eine perspektivische Darstellung eines Gerätehalters, welcher für eine mehrfache Befestigung ausgebildet ist.

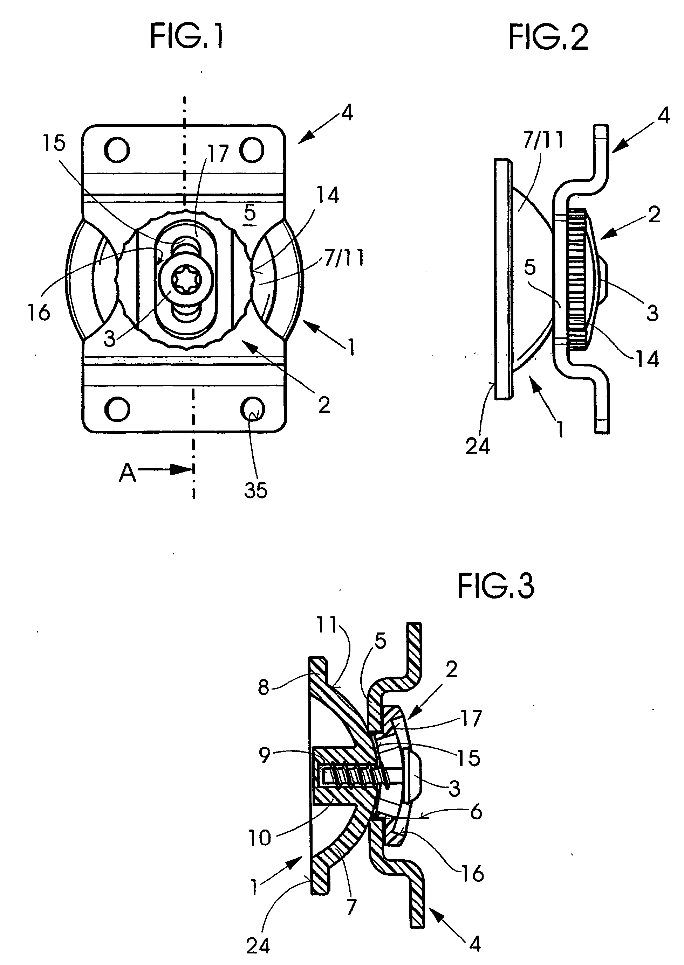

Wie die Figuren 1, 2 und 3 zeigen besteht die Befestigungsanordnung aus einem Flanschelement 1, einem Stellelement 2 und einer Spannschraube 3 und außerdem aus einer an dem zu befestigenden Gerätehalter 4 ausgebildeten Lagerplatte 5, welche mit einer Durchgangsbohrung 6 versehen ist. An dieser Stelle sei erwähnt, dass die Befestigung des Flanschelementes 1 am Einbauort beispielweise an einer Armaturentafel im Falle des vorliegenden Ausführungsbeispiels vorzugsweise durch Kleben erfolgt. Bei geeigneter Ausbildung des Flanschelementes 1 ist selbstverständlich auch ein Befestigen mittels Schrauben oder anderer Verbindungsmittel denkbar. An dem Flanschelement 1, das von einer Kalotte 7 und einem ringförmigen Flansch 8 gebildet wird, ist ein mit einer Gewindebohrung 9 versehener, zentraler Ansatz 10 angeformt. Wie insbesondere aus der Figur 3 ersichtlich ist, stützt sich, wenn die Spannschraube 3 angezogen ist, das Flanschelement 1 an der Lagerplatte 5 des Gerätehalters 4 ab, wobei die eine, nicht näher bezeichnete Bohrungskante der Durchgangsbohrung 6 auf der Oberfläche 11 der Kalotte 7 aufliegt, mit anderen Worten, dem Flanschelement 1 während des Justierens als Schneidenlagerung dient und vor dem endgültigen Festspannen des Gerätehalters 4 auf dem Flanschelement 1 ein allseitiges Verschwenken innerhalb eines bestimmten Winkels gestattet.

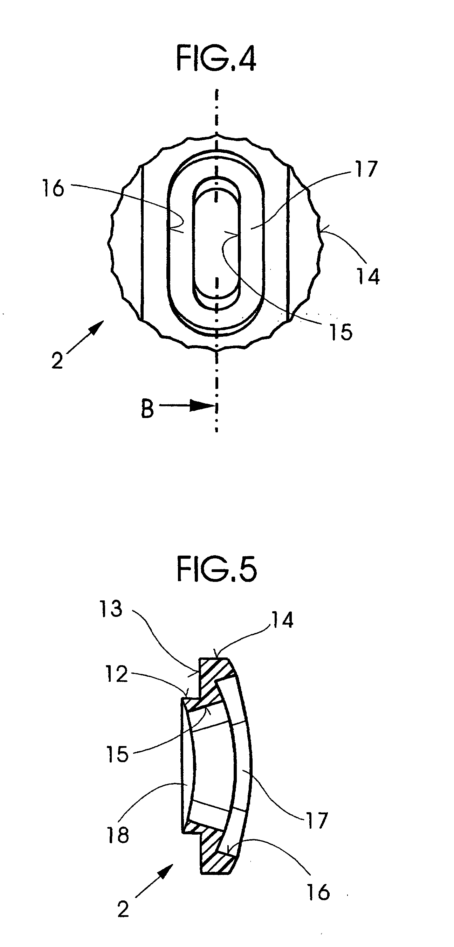

Das auf der dem Flanschelement 1 gegenüberliegenden Seite an der Lagerplatte 5 angeordnete Stellelement 2 weist einen Absatz 12 auf (Figur 5), mittels dessen das Stellelement 2 in der Durchgangsbohrung 6 drehbar gelagert ist. Mit einer Ringfläche 13 stützt sich das Stellelement 2 beim Verschrauben von Flanschelement 1 und Stellelement 2 an der Lagerplatte 5 ab. Ein am äußeren Umfang des Stellelementes 2 ausgebildeter Rändel 14 dient beim Justieren des Gerätehalters 4 dem gezielten Einstellen der Schwenkebene. Ferner ist das Stellelement 2 mit einem diametrisch ausgebildeten Schlitz 15 versehen, dessen Breite im wesentlichen dem Schaftdurchmesser der Spannschraube 3 entspricht. Der Schlitz 15 ist mit einer dem im einzelnen nicht bezeichneten Kopf der Spannschraube 3 zugeordneten Senkung 16 versehen, wobei die Grundfläche der Senkung 16, das heißt, die Auflagefläche 17 des Kopfes der Spannschraube 3 in Richtung des Schlitzes 15 gekrümmt ausgebildet ist, und zwar mit einem Radius derart, dass nach dem Zusammenfügen des Flanschelementes 1 und des Stellelementes 2 an der Lagerplatte 5 die Auflagefläche 17 konzentrisch zur Kalotte 7 angeordnet ist. Mit 18 ist eine der Kalotte 7 entsprechende an dem Stellelement in axialer Richtung ausgebildete Freisparung bezeichnet.

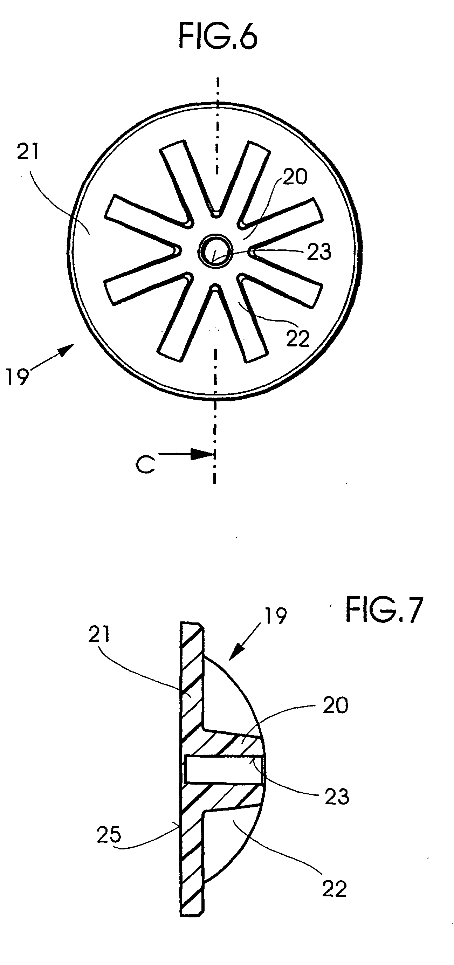

Die Figuren 6 und 7 zeigen ein Flanschelement 19 bestehend aus einer mit einem zentralen Ansatz 20 versehenen scheibenförmigen Platte 21 sowie mehreren an dem Ansatz 20 radial angesetzten Rippen, von denen eine mit 22 bezeichnet ist. Dabei ist die nach außen weisende Kontur der Rippen 22 derart gestaltet, dass sie dem Radius der Kalotte 7 entspricht. Mit 23 ist eine der Spannschraube 3 zugeordnete Gewindebohrung bezeichnet. Das Flanschelement 19 weist außerdem im Gegensatz zum Flanschelement 1, an welchem eine kreisringförmige Flanschfläche 24 ausgebildet ist, eine kreisförmige Flanschfläche 25 auf.

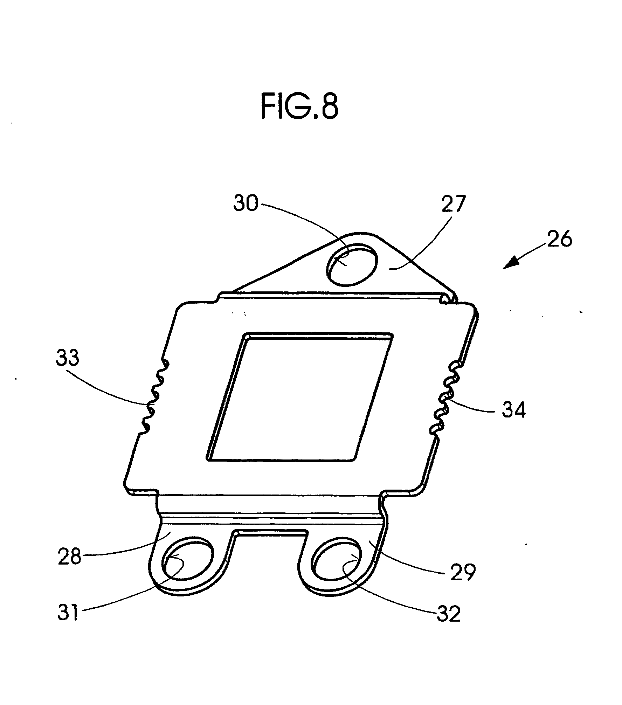

Wie aus der Figur 8 ersichtlich ist, sind an dem dort dargestellten, für die Aufnahme eines relativ schweren Gerätes geeigneten Gerätehalter 26 mehrere, in Form angebogener Lappen ausgebildete Lagerplatten 27, 28 und 29 angeformt. In diesen sind Durchgangsbohrungen 30, 31 und 32 zur Anbringung von mittels Spannschrauben 3 miteinander verbindbaren Flansch- und Stellelementen 1 bzw. 19 und 2 vorgesehen. Parallel an dem Gerätehalter 26 ausgebildete Zahnreihen 33 und 34 dienen im Gegensatz zu den im Gerätehalter 4 angebrachten Bohrungen, von denen eine mit 35 bezeichnet ist, einem wahlweisen Festspannen eines Gerätes auf dem Gerätehalter 26.

## Patentansprüche

1. Befestigungsanordnung zum justierbaren Befestigen eines Gerätes unter Verwendung eines unmittelbar am Gehäuse des Gerätes ausgebildeten bzw. eines mit dem Gerät verbindbaren Gerätehalters, wobei dem Gerätehalter eine der Befestigung des Gerätes am Einbauort dienendes Flanschelement zugeordnet ist und mittels einer Spannschraube unterschiedliche Winkellagen zwischen dem Gerätehalter und der Flanschfläche des Flanschelementes fixierbar sind,
**dadurch gekennzeichnet,**
**dass** auf der Gegenseite der Flanschfläche (24, 25) des Flanschelementes (1, 19) eine Kalotte (7) mit einer in deren Achsrichtung angebrachter Gewindebohrung (9, 23) ausgebildet ist,
**dass** ein scheibenförmiges, mit einem diametrischen Schlitz (15) versehenes Stellelement (2) vorgesehen ist, wobei die Breite des Schlitzes (15) dem Schaftdurchmesser der Spannschraube (3) entspricht und die dem Kopf der Spannschraube (3) zugeordnete Auflagefläche (17) in Richtung des Schlitzes (15) gekrümmt ist,
**dass** der Gerätehalter (4) wenigstens eine Lagerplatte (5) aufweist, in welcher eine Durchgangsbohrung (6) vorgesehen ist, deren Durchmesser um ein Mehrfaches größer ist, als der Schaftdurchmesser der Spannschraube (3) und deren eine Bohrungskante, an welcher die Kalotte (7) des Flanschelementes (1, 19) während des Justierens anliegt, dem Flanschelement (1, 19) als eine Schwenkbewegungen quer zur Bohrungsachse ermöglichende Schneidenlagerung dient und
**dass** für das Stellelement (2), welches der dem Flanschelement (1, 19) gegenüberliegenden Seite der Lagerplatte (5) zugeordnet ist, an der Lagerplatte (5) eine Drehbewegung zentrisch zur Durchgangsbohrung (6) ermöglichende Lagerung vorgesehen ist.

2. Befestigungsanordnung nach Anspruch 1,
**dadurch gekennzeichnet,**
**dass** an dem Stellelement (2) ein Absatz (12) ausgebildet ist, dessen Durchmesser dem Durchmesser der in der Lagerplatte (5) befindlicher Durchgangsbohrung (6) entspricht.

3. Befestigungsanordnung nach Anspruch 1,
**dadurch gekennzeichnet,**
**dass** das Stellelement (2) umfangsseitig mit einem eine Drehbewegung von Hand ermöglichendem Profil, beispielsweise einem Rändel (14), versehen ist.

4. Befestigungsanordnung nach Anspruch 1,
**dadurch gekennzeichnet,**
**dass** dem in dem Stellelement (2) vorgesehenen Schlitz (15) eine nutförmige Senkung (16) zugeordnet ist, deren Breite dem Kopfdurchmesser der Spannschraube (3) entspricht.

5. Befestigungsanordnung nach Anspruch 1,
**dadurch gekennzeichnet,**
**dass** an dem Flanschelement (1) eine kreisringförmige Flanschfläche (24) ausgebildet ist.

6. Befestigungsanordnung nach Anspruch 1,
**dadurch gekennzeichnet,**
**dass** die Flanschfläche des Flanschelementes (19) kreisförmig ausgebildet ist und
**dass** die Kalotte (7) von mehreren radial an einem mit einer Gewindebohrung (23) versehenen Ansatz (20) angeformter Rippen (22) gebildet wird.

7. Befestigungsanordnung nach Anspruch 1,
**dadurch gekennzeichnet,**
**dass** der Gerätehalter (4) als brückenförmiger Träger ausgebildet ist und **dass** die dem Anbringen der Befestigungsmittel dienende Durchgangsbohrung (6) im wesentlichen in der Mitte des Trägers vorgesehen ist.

8. Befestigungsanordnung nach Anspruch 1,
**dadurch gekennzeichnet,**
**dass** an einem als Gerätehalter (26) dienenden plattenförmigen Träger mehrere als Lagerplatten (27, 28, 29) für Befestigungsmittel dienende Lappen angeformt sind.

## Claims

1. Fastening assembly for the adjustable mounting of an apparatus using an apparatus holder designed directly on the housing of the apparatus or an apparatus holder which can be connected to the apparatus, a flange element serving for mounting the apparatus in the fitting location being assigned to the apparatus holder and different angular positions being fixable between the apparatus holder and the flange surface of the flange element by means of a clamping screw, **characterized in that** a dome (7) with a threaded bore (9, 23) provided in its axial direction is designed on the opposite side of the flange surface (24, 25) of the flange element (1, 19), **in that** a disc-shaped adjusting element (2) provided with a diametrical slot (15) is provided, the width of the slot (15) corresponding to the shank diameter of the clamping screw (3) and the supporting surface (17) assigned to the head of the clamping screw (3) being curved in the direction of the slot (15), **in that** the apparatus holder (4) comprises at least one bearing plate (5), in which a through-bore (6) is provided, the diameter of which is greater by a multiple than the shank diameter of the clamping screw (3) and one bore edge of which, against which the dome (7) of the flange element (1, 19) bears during adjustment, serves the flange element (1, 19) as a knife-edge bearing which makes pivoting movements transversely to the bore axis possible, and **in that** bearing support which makes rotary movement concentrically with the through-bore (6) possible is provided on the bearing plate (5) for the adjusting element (2), which is assigned to that side of the bearing plate (5) lying opposite the flange element (1, 19).

2. Fastening assembly according to Claim 1, **characterized in that** a shoulder (12), the diameter of which corresponds to the diameter of the through-bore (6) present in the bearing plate (5), is designed on the adjusting element (2).

3. Fastening assembly according to Claim 1, **characterized in that** the adjusting element (2) is provided on its periphery with a profile, for example a knurling (14), which makes rotary movement by hand possible.

4. Fastening assembly according to Claim 1, **characterized in that** a groove-shaped indentation (16), the width of which corresponds to the head diameter of the clamping screw (3), is assigned to the slot (15) provided in the adjusting element (2).

5. Fastening assembly according to Claim 1, **characterized in that** an annular flange surface (24) is designed on the flange element (1).

6. Fastening assembly according to Claim 1, **characterized in that** the flange surface of the flange element (19) is circular in design and **in that** the dome (7) is formed by a number of ribs (22) formed radially on a projection (20) provided with a threaded bore (23).

7. Fastening assembly according to Claim 1, **characterized in that** the apparatus holder (4) is designed as a bridge-shaped carrier and **in that** the through-bore (6) serving for fitting of the fastening means is provided essentially in the centre of the carrier.

8. Fastening assembly according to Claim 1, **characterized in that** a number of tabs serving as bearing plates (27, 28, 29) for fastening means are formed on a plate-shaped carrier serving as an apparatus holder (26).

## Revendications

1. Dispositif de fixation destiné à la fixation réglable d'un appareil en utilisant un support d'appareil ménagé directement sur le boîtier de l'appareil ou un support d'appareil pouvant être lié à l'appareil, où un élément à bride servant à la fixation de l'appareil au lieu d'installation correspond au support d'appareil et où diverses positions angulaires entre le support d'appareil et la surface de bride de l'élément à bride peuvent être réglées au moyen d'une vis de serrage,
**caractérisé par le fait**
**que**, sur la face de l'élément à bride (1, 19) opposée à la face de bride (24, 25), est ménagée une calotte (7) ayant un alésage fileté (9, 23) disposé dans la direction axiale, qu'il est prévu un élément de réglage (2) en forme de disque muni d'une fente diamétrale (15), la largeur de la fente (15) correspondant au diamètre de la tige de la vis de serrage (3) et la surface d'application (17) correspondant à la tête de la vis de serrage (3) étant incurvée dans la direction de la fente (15),
**que** le support d'appareil (4) comporte au moins une plaque support (5), dans laquelle est prévu un alésage traversant (6), dont le diamètre est beaucoup plus important que le diamètre de la tige de la vis de serrage (3) et dont une arête d'alésage, sur laquelle s'applique la calotte (7) de l'élément à bride (1, 19) pendant le réglage, sert à l'élément à bride (1, 19) de palier à couteau permettant des mouvements pivotants perpendiculairement à l'axe de l'alésage et
**que**, pour l'élément de réglage (2), qui correspond à la face de la plaque support (5) opposée à l'élément à bride (1, 19), il est prévu, sur la plaque support (5), un palier permettant un mouvement rotatif concentrique à l'alésage traversant (6).

2. Dispositif de fixation selon la revendication 1
**caractérisé par le fait**
**qu'**un épaulement (12) est ménagé sur l'élément de réglage (2) dont le diamètre correspond au diamètre de l'alésage traversant (6) se trouvant dans la plaque support (5).

3. Dispositif de fixation selon la revendication 1
**caractérisé par le fait**
**que** l'élément de réglage (2) est muni sur sa périphérie d'un profil, à titre d'exemple, d'une molette (14) permettant un mouvement rotatif commandé à la main.

4. Dispositif de fixation selon la revendication 1
**caractérisé par le fait**
**qu'**un enfoncement (16) en forme de rainure correspond à la fente (15) prévue dans l'élément de réglage (2) et a une largeur correspondant au diamètre de la tête de la vis de serrage (3).

5. Dispositif de fixation selon la revendication 1
**caractérisé par le fait**
**qu'**une face de bride (24) en forme de couronne torique est ménagée sur l'élément à bride (1).

6. Dispositif de fixation selon la revendication 1
**caractérisé par le fait**
**que** la face de bride de l'élément à bride (19) a une forme circulaire et
**que** la calotte (7) est formée par plusieurs nervures (22) ménagées sur un rebord (20) muni d'un alésage fileté (23).

7. Dispositif de fixation selon la revendication 1
**caractérisé par le fait**
**que** le support d'appareil (4) est conçu comme support en forme de portique et
**que** l'alésage traversant (6) servant à la mise en place des moyens de fixation est prévu, pour l'essentiel, au milieu du support.

8. Dispositif de fixation selon la revendication 1
**caractérisé par le fait**
**que**, sur un support en forme de plaque servant de support d'appareil (26), sont ménagées plusieurs languettes servant de plaques support (27, 28, 29) pour des moyens de fixation.
